# EUROPÄISCHE PATENTSCHRIFT

(11) **EP 3 766 843 B1**
(45) Veröffentlichungstag und Bekanntmachung des Hinweises auf die Patenterteilung: **13.11.2024**
(21) Anmeldenummer: 19186741.5
(22) Anmeldetag: 17.07.2019
(51) Int. Cl.: C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET D'UNE PRÉFORME POUR FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); SATTMANN, Ralph, 63450 Hanau (DE); HOFMANN, Achim, 63450 Hanau (DE); HÜNERMANN, Michael, 63450 Hanau (DE); SCHUSTER, Kay, 63450 Hanau (DE)
(74) Vertreter: Staudt, Armin Walter

(56) Entgegenhaltungen:
- EP-A1- 3 136 143
- DE-A1- 102004 054 392
- GB-A- 2 566 466
- US-A1- 2003 230 118
- US-A1- 2005 226 578
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972

## Beschreibung

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen, wobei sich die Antiresonanzelement-Vorformline aus mehreren, mit-einander verschachtelten Strukturelementen zusammensetzen,
(c) Anordnen der Antiresonanzelement-Vorformlinge an Soll-Positionen der Innenseite der Hüllrohr-Wandung unter Bildung einer primären Vorform für die Hohlkernfaser, die einen hohlen Kernbereich und einen Mantelbereich aufweist, und
(d) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren,

Außerdem betrifft die Erfindung ein Verfahren zur Herstellung einer Vorform für eine Antiresonante Hohlkernfaser oder zur Herstellung eines Halbzeugs, aus dem durch Elongieren die Antiresonante Hohlkernfaser erhalten wird, die einen sich entlang einer Faser-Längsachse erstreckenden Hohlkern und den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen, wobei sich die Antiresonanzelement-Vorformline aus mehreren, miteinander verschachtelten Strukturelementen (4a; 4b) zusammensetzen,
(c) Anordnen der Antiresonanzelement-Vorformlinge an jeweils einer Soll-Position der Innenseite der Hüllrohr-Wandung unter Bildung einer primären Vorform für die Hohlkernfaser, die einen hohlen Kernbereich und einen Mantelbereich aufweist, und
(d) Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

In der US 2005/226578 A1 wird zur Herstellung einer photonischen optischen Faser ein rohrförmiges Ensemble von rohr- und stabförmigen Elementen erzeugt, wobei Leerräume zwischen den Elementen mit einer Füllmasse aufgefüllt werden. Die Füllmasse wird aus der Gasphase abgeschieden oder aus der Flüssigphase erzeugt, beispielsweise mittels eines SiO₂-Partikel enthaltenden, kolloidalen Sols. Das Auffüllen der Leerräume mit der Füllmasse erfolgt von der Ensemble-Innenbohrung ausgehend. Die Füllmasse dient der Fixierung der Elemente und kann auch zur Befestigung einer Innenkapillare genutzt werden.

Aus der US 2003/0230118 A1 ist es bekannt, zur Herstellung einer mikrostrukturierten optischen Faser eine Vorform mit Hohlkern zu erzeugen, der von einer Vielzahl von Kanälen umgeben ist. Beim Elongieren der Vorform wird im Hohlkern ein anderer Innendruck aufrechterhalten als in den Kanälen. Zu diesem Zweck kann in den Hohlkern ein Gaszuführungsrohr eingesetzt werden, das mittels einer SiO₂-haltigen Masse in der Hohlkern-Innenbohrung fixiert wird. Bei einer anderen Verfahrensweise wird der Hohlkern von einem porösen Stopfen aus der SiO₂-haltigen Masse partiell abgedichtet. Die SiO₂-haltige Masse kann ein Sol-Gel-Derivat sein, das auch partikelförmiges SiO₂ enthalten kann.

Aus der GB 2 566 466 A ist ein Verfahren zur Herstellung einer Vorform für eine antiresonante optische Hohlkernfaser bekannt. Das Anordnen der ARE-Außenrohre (antiresonant cladding tubes) an vordefinierten peripheren Stellen innerhalb des Hüllrohres umfasst den Einsatz von Abstandselementen, die jeweils mit zwei benachbarten ARE-Außenrohren in Kontakt sind. Der radiale Abstand r2 zwischen diesen Kontaktpunkten und der Hüllrohr-Längsachse ist größer als der radiale Abstand r1 zwischen den Längsachsen des ARE-Außenrohres und der Hüllrohr-Längsachse. Die Abstandselemente können eine integrale Struktur mit dem Hüllrohr bilden. Das Hüllrohr kann dabei so geformt werden, dass es radial vorstehende Teile enthält, beispielsweise durch Formen oder durch mechanische Bearbeitung der Innenwand.

A. F. Kosolapov et al.: "Hollow-core revolver fibre with a doublecapillary reflective cladding", Quantum Electronics, Vol. 46., No. 3, 29. March 2016 (2016-03-29), Pages 267-270, DOI: 10.1070/QEL15972, beschreibt ein Verfahren zur Herstellung einer Antiresonanten Hohlkernfaser durch Bereitstellen eines Hüllrohres und einer Anzahl von Antiresonanzelement-Vorformlingen, die als Doppelrohr aus ARE-Außenrohr und einem an dessen Innenwandung angeschweißtem ARE-Innenrohr zusammengesetzt sind. Das Doppelrohr wird elongiert und zeigt danach einen ovalen Querschnitt. Fünf der ovalen Doppelrohre werden an der Innenseite des Hüllrohres montiert. Dabei wird zwischen benachbarten Doppelrohren jeweils eine speziell angefertigte Quarzglasplatte mit einer Dicke von 1,27mm positioniert. Die Doppelrohre werden anschließend mit der Hüllrohr-Innenseite verschweißt. Die so erzeugte primäre Vorform wird zu einer sekundären Vorform elongiert und daraus die Hohlkernfaser gezogen.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem ARE-Außenrohr und einseitig an der ARE-Außenrohr-Innenmantelfläche eingeschweißtem ARE-Innenrohr, an der Innenseite eines Hüllrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

Die bekannten Verbindungs- und Versiegelungsmethoden genügen auch nicht hohen Anforderungen an die Temperaturstabilität und sie können bei der Durchführung zu Heißformprozessen zu Leckagen und Spannungen führen.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass das Bereitstellen der Antiresonanzelement-Vorformlinge eine Fixierungs-Maßnahme unter Einsatz einer amorphe SiO₂-Partikel enthaltenden Versiegelungs- oder Verbindungsmasse umfasst, wobei die Strukturelemente untereinander unter Einsatz der Versiegelungs- oder Verbindungsmasse fixiert werden, indem die Versiegelungs- oder Verbindungsmasse durch Erhitzen beim Durchführen eines Heißformprozesses gemäß Verfahrensschritt (d) verglast wird.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonananter Elemente in den Hohlkernfasern (hier kurz als "Antiresonanzelemente" bezeichnet) enthalten sind. Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Die beim erfindungsgemäßen Verfahren zum Fixieren eingesetzte Versiegelungs-oder Verbindungsmasse enthält amorphe SiOz-Partikel, die beispielsweise in einer Dispersionsflüssigkeit aufgenommen sind. Diese Masse wird zwischen den zu verbindenden Flächen aufgetragen und ist beim Einsatz in der Regel flüssig oder pastös. Beim Trocknen bei niedriger Temperatur wird die Dispersionsflüssigkeit teilweise oder vollständig entfernt und die Masse verfestigt. Die Versiegelungs-oder Verbindungsmasse und insbesondere die nach dem Trocknen erhaltene, verfestigte SiO₂-haltige Versiegelungs- oder Verbindungsmasse genügt den Anforderungen zur Fixierung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden. Dabei verhält sich die Versiegelungs- oder Verbindungsmasse wie Quarzglas; sie wird viskos und verformbar. Sie ist vorzugsweise auch geeignet, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen verdichtet und wird durch Erhitzen beim Durchführen eines Prozesses gemäß Verfahrensschritt (d) verglast.

Beim Elongierprozess zersetzt sich die Versiegelungs- oder Verbindungsmasse nicht und sie setzt wenig an Verunreinigungen frei. Sie zeichnet sich somit durch thermische Stabilität und Reinheit beim Elongierprozess aus und sie vermeidet Verformungen, wie sie ansonsten infolge unterschiedlicher thermischer Ausdehnungskoeffizienten zwischen einer Versiegelungs- oder Verbindungsmasse aus einem nicht SiO₂-Partikel enthaltenden Werkstoff auftreten können.

Der thermische Ausdehnungskoeffizient der SiO₂-haltigen Versiegelungs- oder Verbindungsmasse entspricht im Idealfall dem der zu verbindenden Flächen. Durch Zugabe eines oder mehrerer Dotierstoffe kann er verändert und an angepasst werden. Als Dotierstoffe kommen beispielsweise Al₂O₃, TiO₂, Y₂O₃, AIN, Si₃N₄, ZrO₂, BN, HfO₂ oder Yb₂O₃ in Betracht.

Bei Antiresonanzelement-Vorformlingen, die sich aus mehreren, miteinander verschachtelten Strukturelementen zusammensetzen, werden die Strukturelemente untereinander unter Einsatz der Versiegelungs- oder Verbindungsmasse fixiert. Die Fixierung zwischen den einzelnen Strukturelementen erfolgt entweder punktuell an einer oder an mehreren Stellen oder sie erstreckt sich über eine größere oder über die gesamte Länge der Strukturelemente, beispielsweise über einen Längsstreifen an der Zylindermantelfläche zylinderförmiger Strukturelemente. Die Fixierung zylinderförmiger Strukturelemente unter Einsatz der Versiegelungs- oder Verbindungsmasse erfolgt vorzugsweise nur an einem stirnseitigen Ende oder nur an beiden stirnseitigen Enden der Strukturelemente.

Mit der Erfindung können Antiresonante Hohlkernfasern sowie Vorformen dafür präzise und reproduzierbar hergestellt werden.

Bei einer bevorzugten Verfahrensweise werden die Antiresonanzelement-Vorformlinge an der Innenseite des Hüllrohres unter Einsatz der Versiegelungs- oder Verbindungsmasse fixiert.

Die Fixierung erfolgt punktuell an einer oder mehreren Stellen oder sie erstreckt sich über eine größere oder über die gesamte Länge des Antiresonanzelement-Vorformlings.

Die Antiresonanzelement-Vorformlinge sind in der Regel zylinderförmig ausgeführt und haben zwei sich gegenüberliegende Endbereiche, wobei die Fixierung unter Einsatz der Versiegelungs- oder Verbindungsmasse vorzugsweise ausschließlich an einem der Endbereiche oder ausschließlich an beiden Endbereichen erfolgt.

Eine Beeinträchtigung der Lichtleitung durch die Versiegelungs- oder Verbindungsmasse wird so vermindert und sie wird verhindert, wenn die mit Versiegelungs- oder Verbindungsmasse belegten Volumenbereiche der Vorform nachträglich entfernt oder nicht zum Ziehen der Hohlkernfasern genutzt werden.

Die Versiegelungs- oder Verbindungsmasse wird beispielsweise an den Soll-Positionen der Antiresonanzelement-Vorformlinge punkt- oder streifenweise auf der Innenseite des Hüllrohres aufgetragen, und darauf werden die Antiresonanzelement-Vorformlinge gepresst und so zumindest vorläufig fixiert. Die Auftragsfläche ist vorzugsweise so klein wie möglich, um Beeinträchtigungen der Lichtleitung zu minimieren. Vorzugsweise ist die Auftragsfläche so klein, dass sie in einer Projektion von der Vorformling-Mittelachse auf den Antiresonanzelement-Vorformling nicht sichtbar ist, also vom Antiresonanzelement-Vorformling vollständig abgedeckt ist.

Es hat sich aber auch eine Verfahrensweise bewährt, bei der ein Hüllrohr mit kreisrundem Innenquerschnitt bereitgestellt wird, wobei an der Innenseite der Hüllrohr-Wandung eine Längsstruktur, vorzugsweise eine Längsrille, erzeugt wird, die eine Ausnehmung aufweist, an der oder in der die Antiresonanzelement-Vorformlinge fixiert werden.

Die Versiegelungs- oder Verbindungsmasse wird dabei in die Ausnehmung der Längsstruktur eingebracht, so dass die Antiresonanzelement-Vorformlinge bei Anordnung an der jeweiligen Soll-Position gemäß Verfahrensschritt (c) die Versiegelungs- oder Verbindungsmasse kontaktieren.

Dabei können die Antiresonanzelement-Vorformlinge gleichzeitig die Längskanten der Ausnehmung berühren. Die Ausnehmung dient hierbei nicht nur zur Aufnahme der Versiegelungs- oder Verbindungsmasse, sondern auch als Positionierungshilfe für den Antiresonanzelement-Vorformling, indem sie es erleichtert, dass die Antiresonanzelement-Vorformlinge vorgegebene definierte Positionen an der Innenseite des Hüllrohres einnehmen.

Die Genauigkeit der Positionierung der Vorformlinge wird verbessert, indem das Hüllrohr vorab durch spanende mechanische Bearbeitung strukturiert wird. Daher wird die Längsstruktur der Hüllrohr-Innenwandung bevorzugt durch Bohren, Sägen, Fräsen Schneiden oder Schleifen erzeugt.

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Bei einer vorteilhaften Verfahrensweise umfasst das Anordnen der Antiresonanzelement-Vorformlinge an der Hüllrohr-Innenseite ein Fixieren mittels einer in die Hüllrohr-Innenbohrung einzuführenden Positionierungsschablone, die mehrere radial nach außen weisende Halteelemente zur Positionierung der Antiresonanzelement-Vorformlinge an den Soll-Positionen aufweist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung mittels der Versiegelungs- oder Verbindungsmasse. Dabei wird die Positionierungsschablone vorzugsweise ausschließlich im Bereich der Hüllrohr-Stirnseiten eingesetzt, vorzugsweise im Bereich beider Hüllrohr-Stirnseiten.

Bei einer weiteren bevorzugten Verfahrensweise wird die Vorform zum Durchführen eines Prozesses gemäß Verfahrensschritt (d) mit einem Halter verbunden, wobei der Verbund zwischen Vorform und Halter mittels der Versiegelungs- oder Verbindungsmasse erzeugt wird.

Der Halter dient zur Halterung der Vorform mit horizontal oder vertikal orientierter Vorform-Längsachse in einer Vorrichtung zur Durchführung eines Heißformprozesses, beispielsweise an der Vorschub-Einrichtung einer Elongier- oder Faserzieh-Einrichtung. Er kann an einer Stirnseite oder an beiden Stirnseiten der Vorform angreifen und er besteht vorzugsweise aus Glas. Durch die Herstellung der Verbindung zwischen Vorform und Halter mittels der Versiegelungs- oder Verbindungsmasse wird eine Schmelzverbindung dieser Bauteile, wie es sonst üblich ist, vermieden, und dadurch auch mit der Schmelzverbindung einhergehende thermische Verformungen.

Bei einer weiteren bevorzugten Verfahrensweise wird die Vorform zum Durchführen eines Prozesses gemäß Verfahrensschritt (d) mit einem Gasanschluss verbunden, wobei der Verbund zwischen Vorform und Gasanschluss mittels der Versiegelungs- oder Verbindungsmasse erzeugt wird.

Der Gasanschluss besteht vorzugsweise aus Glas und er dient zur Einleitung eines Druckgases oder zum Evakuieren. Der im Stand der Technik vorgegebene Weg ist hierbei eine durch eine Kunststoffmasse gedichtete Verbindung. Diese ist zwar sehr flexibel, sie ist aber nicht temperaturstabil. Leckagen bei hoher Temperatur können zu Temperaturschwankungen insbesondere beim Faserziehprozess führen. Durch die Herstellung der Verbindung zwischen Vorform und Gasanschluss mittels der Versiegelungs- oder Verbindungsmasse wird eine temperaturstabile und zugleich gasdichte Verbindung erzeugt.

Der Gasanschluss kann an der Vorform insgesamt anliegen, wobei die Verbindung mit der Zylindermantelfläche oder mit der Stirnseite des äußersten Rohres beziehungsweise der äußersten Materialschicht erfolgt, und/oder der Gasanschluss kann mit einzelnen Bauteilen oder Bestandteilen der Vorform erfolgen, beispielsweise mit Strukturelementen der Antiresonanzelement-Vorformlinge. Gerade beim Anschluss mit dünnen, filigranen Bauteilen, wie besagten Strukturelementen, kann es bei Einsatz keramischer Kleber zu Spannungen kommen, die die Bauteile zerstören können. Im Hinblick auf die Vermeidung derartiger Spannungen ist eine Dotierung der SiO₂-haltigen Versiegelungs- oder Verbindungsmasse zur Anpassung des thermischen Ausdehnungskoeffizienten an den des zu verbindenden Bauteils oder Vorform-Bestandteils vorteilhaft. Als Dotierstoffe kommen beispielsweise Al₂O₃, TiO₂, Y₂O₃, AIN, Si₃N₄, ZrO₂, BN, HfO₂ oder Yb₂O₃ in Betracht. Bei einer weiteren bevorzugten Verfahrensweise werden zum Durchführen eines Prozesses gemäß Verfahrensschritt (d) offene Enden der Antiresonanzelement-Vorformlinge und/oder einzelne Strukturelemente der Antiresonanzelement-Vorformlinge und/oder ein etwaiger Ringspalt zwischen Rohrelementen mittels der Versiegelungs- oder Verbindungsmasse verschlossen.

Die Antiresonanzelement-Vorformlinge setzen sich aus einem einzelnen, nicht verschachtelten Strukturelement (beispielsweise einem Glasrohr) (außerhalb des Schutzumfangs der Ansprüche) oder aus mehreren, miteinander verschachtelten, kleineren Strukturelementen zusammen, bei denen das Glasrohr mindestens ein rohrförmiges oder planes Bauteil umhüllt (nested elements). Die Versiegelungs- oder Verbindungsmasse dient hier zur fluidischen Abdichtung einzelner oder aller Strukturelemente der Vorform. Die Abdichtung erfolgt durch Verschließen der stirnseitigen Öffnungen der betreffenden Strukturelemente mit der Versiegelungs- oder Verbindungsmasse. Bei beidseitig offenen Strukturelementen kann es genügen, wenn eine der stirnseitigen Öffnungen mit der Versiegelungs- oder Verbindungsmasse verschlossen wird. Durch das Verschließen von Strukturelementen sind diese der Einwirkung einer Druckbeaufschlagung oder Evakuierung entzogen, die ansonsten auf die Vorform beziehungsweise auf die nicht verschlossenen Strukturelemente wirkt. Beispielsweise können auf diese Weise bei miteinander verschachtelten Strukturelementen, die Druckbeaufschlagung oder Evakuierung bei einem der mehreren der kleineren Strukturelemente verhindert werden. Diese Maßnahme ermöglicht eine positionsgenaue, definiert Drucksteuerung, insbesondere beim Faserziehprozess.

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelemente um den Hohlkern mit einer ungeradzahligen Symmetrie angeordnet sind

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass das Bereitstellen der Antiresonanzelement-Vorformlinge umfasst eine Fixierungs-Maßnahme unter Einsatz einer amorphe SiO₂-Partikel enthaltenden Versiegelungs- oder Verbindungsmasse, wobei die Strukturelemente untereinander unter Einsatz der Versiegelungs- oder Verbindungsmasse fixiert werden, indem die Versiegelungs- oder Verbindungsmasse durch Erhitzen beim Durchführen eines Heißformprozesses gemäß Verfahrensschritt (d) verglast wird.

Die Vorform ist Ausgangspunkt für die Herstellung der Antiresonanten Hohlkernfaser. Durch Elongieren der primären Vorform wird entweder direkt die Antiresonante Hohlkernfaser gezogen oder es wird zunächst durch Weiterverarbeitung der primären Vorform ein anderes Halbzeug erzeugt, das hier auch als "sekundäre Vorform" bezeichnet wird, und aus der die Antiresonante Hohlkernfaser gezogen werden kann.

In jedem Fall umfasst die Herstellung der Vorform den Einbau und das Verbinden von Antiresonanzelement-Vorformlingen mit einem Hüllrohr. Bei der Herstellung der Vorform umfasst das Bereitstellen (und bei einer weiteren Verfahrensweise das Anordnen) der Antiresonanzelement-Vorformlinge eine Fixierungs-Maßnahme unter Einsatz einer amorphe SiO₂-Partikel enthaltenden und bei Erhitzung vorzugsweise glasbildenden Versiegelungs- oder Verbindungsmasse. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenseite zugänglich; sie kann sich auch bis zur Außenseite durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt in schematischer Darstellung und in einer Draufsicht auf den radialen Querschnitt
- **Figur 1**: eine erste Ausführungsform einer primären Vorform mit darin positionierten und unter Einsatz einer SiO₂-haltigen Versiegelungs- oder Verbindungsmasse fixierten Antiresonanzelement-Vorformlingen zur Herstellung einer Vorform für eine Hohlkernfaser,
- **Figur 2**: eine zweite Ausführungsform einer primären Vorform mit darin positionierten und unter Einsatz einer SiO₂-haltigen Versiegelungs- oder Verbindungsmasse fixierten Antiresonanzelement-Vorformlingen zur Herstellung einer Vorform für eine Hohlkernfaser,
- **Figur 3**: einen Antiresonanzelement-Vorformling in vergrößerter Darstellung, der aus mehreren Strukturelementen zusammengesetzt ist, die unter Einsatz einer SiO₂-haltigen Versiegelungs- oder Verbindungsmasse miteinander verbunden sind,
- **Figur 4**: eine primäre Vorform mit darin positionierten und fixierten Antiresonanzelement-Vorformlingen, von denen ein Teil unter Einsatz einer SiO₂-haltigen Versiegelungs- oder Verbindungsmasse verschlossen sind,
- **Figur 5**: eine primäre Vorform mit darin positionierten und fixierten Antiresonanzelement-Vorformlingen, die unter Einsatz einer SiO₂-haltigen Versiegelungs- oder Verbindungsmasse verschlossen sind, und
- **Figur 6**: eine primäre Vorform mit einem unter Einsatz einer SiO₂-haltigen Versiegelungs- oder Verbindungsmasse verschlossenen Hohlkern und um den Hohlkern positionierten und fixierten offenen Antiresonanzelement-Vorformlingen.

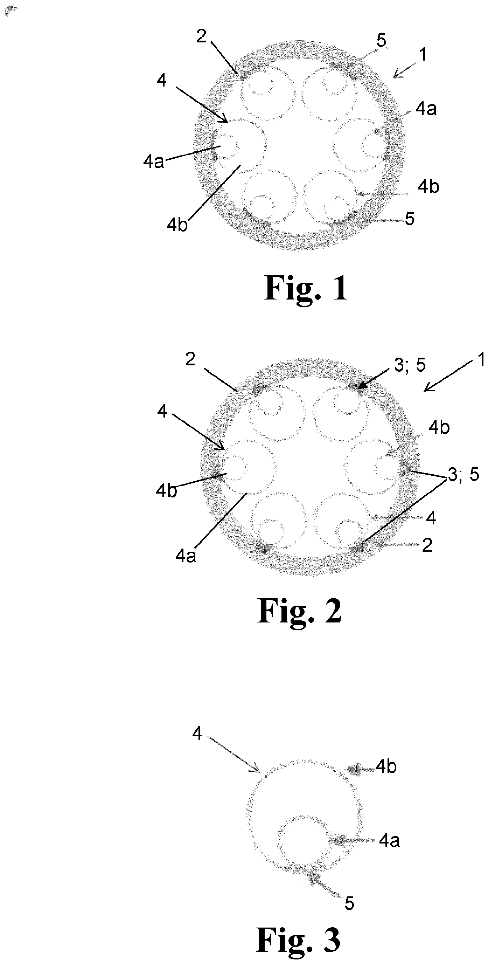

Figuren 1, 2, 4-6 sind außerhalb des Schutzumfangs der Ansprüche.

Beim erfindungsgemäßen Verfahren zur Herstellung einer Hohlkernfaser beziehungsweise zur Herstellung einer Vorform für eine Hohlkernfaser wird zur Fixierung von Bauteilen der Vorform beziehungsweise zur Versiegelung von Hohlkanälen in der Vorform eine auf SiO₂ basierende Versiegelungs- oder Verbindungsmasse eingesetzt. Die Herstellung dieser Masse ist beispielsweise in der DE 10 2004 054 392 A1 beschrieben. Amorphe SiO₂-Partikel werden durch Nassvermahlen von Körnung aus hochreinem Quarzglas erhalten. Es wird ein wässriger Basisschlicker erzeugt, der die amorphen SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von etwa 90%, der zu mindestens 99,9 Gew.-% aus SiO₂ besteht. Zur Anpassung des thermischen Ausdehnungskoeffizienten können geringe Anteile an Dotierstoffen vorhanden sein.

Die Schlickermasse wird auf eine oder beide der zu verbindenden Kontaktflächen aufgebracht. Es ist auch möglich, zwischen den vorab zueinander fixierten Kontaktflächen eine Schlickermasse auszubilden. Diese wird anschließend durch Trocknen und Erhitzen verfestigt. Die für die Bildung des Schlickers verwendeten amorphen SiO₂-Teilchen bestehen aus synthetisch hergestelltem SiO₂ oder sie sind auf Basis von gereinigtem natürlich vorkommendem Rohstoff hergestellt.

**Figur 1** zeigt schematisch eine primäre Vorform 1 (Cane) 1 mit einem Hüllrohr 2, an dessen Wandungs-Innenseite an zuvor definierten azimutalen Positionen im gleichmäßigen Abstand Antiresonanzelement-Vorformlinge 4 fixiert sind; im Ausführungsbeispiel sind es sechs Vorformlinge 4.

Das Hüllrohr 2 besteht aus Quarzglas und hat eine Länge von 500 mm, einen Außendurchmesser von 30 mm und einen Innendurchmesser von 24 mm. Die Antiresonanzelement-Vorformlinge 4 liegen als Ensemble miteinander verschachtelter Strukturelemente (4a; 4b) aus einem ARE-Außenrohr 4a und einem ARE-Innenrohr 4b vor. Das ARE-Außenrohr 4a hat einen Außendurchmesser von 7,4 mm und das ARE-Innenrohr 4b hat einen Außendurchmesser von 3,0 mm. Die Wandstärken beider Strukturelemente (4a; 4b) ist gleich und beträgt 0,35 mm. Die Längen von ARE-Außenrohr 4a und ARE-Innenrohr 4b entsprechen der Hüllrohr-Länge 1.

Die Fixierung der Antiresonanzelement-Vorformlinge 4 an der Innenseite des Hüllrohrs 2 erfolgt mittels der auf SiO₂ basierenden Verbindungsmasse 5.

Die Verbindungsmasse 5 wird auf der Hüllrohr-Innenseite streifenweise aufgetragen und die Antiresonanzelement-Vorformlinge werden darauf unter Einsatz einer Positionierungs-Schablone mit konstruktiv vorgegebener sternförmiger Anordnung von Halteelementen für die einzelnen Antiresonanzelement-Vorformlinge 4 aufgesetzt.

Durch diese Methode wird eine genaue und reproduzierbare Verbindung zwischen Hüllrohr 1 und Antiresonanzelement-Vorformlingen 4 geschaffen. Zur Fixierung genügt eine Verfestigung der Verbindungsmasse 5 bei niedriger Temperatur unterhalb von 300 °C, so dass eine starke Erwärmung der umliegenden Bereiche und somit eine Verformung der Antiresonanzelement-Vorformlinge 4 vermieden wird.

Bei der in **Figur 2** gezeigten Ausführungsform werden an der Innenseite des Hüllrohres 2 vorab jeweils Längsrillen 3 an den Soll-Positionen der Antiresonanzelement-Vorformlinge 4 durch Fräsen erzeugt. Die Längsrillen 3 sind in sechszähliger Symmetrie gleichmäßig um den Innenumfang des Hüllrohres 2 verteilt. Im Bereich der beiden stirnseitigen Enden wird die Verbindungsmasse 5 in die Längsachsrillen 3 eingebracht und daran werden die Antiresonanzelement-Vorformlinge 4 so angedrückt, dass sie mit den Längskanten der Längsrillen 3 zwei achsenparallele Berührungslinien haben. Dadurch wird eine exakte Ausrichtung der Antiresonanzelement-Vorformlinge 4 gewährleistet.

Um die Fixierung zwischen Antiresonanzelement-Vorformlingen 4 und den Längskanten der Längsrillen 3 zu realisieren, ist ein geringer Abstand (wenige µm) oder aber ein Kontakt der Grenzflächen nötig. Daher werden die Antiresonanzelement-Vorformling 4 während des Klebeprozesses vorzugsweise mittels der oben erwähnten Positionierungs-Schablone gegen die Längsrillen 3 gedrückt.

**Figur 3** zeigt schematisch eine Ausführungsform des Antiresonanzelement-Vorformlings 4 in Form eines Ensembles miteinander verschachtelter Strukturelemente (4a; 4b) aus einem ARE-Außenrohr 4a und einem ARE-Innenrohr 4b. Die beiden Strukturelemente (4a; 4b) sind mittels der aus SiO₂ basierenden Verbindungsmasse untereinander verbunden.

Die primäre Vorform 1 in Form des sogenannten "Canes" (das ist das Ensemble aus Hüllrohr 2 und darin eingesetzten Strukturelementen (4a; 4b)) wird anschließend zu einer größeren, sekundären Vorform für die Hohlkernfaser weiterverarbeitet. Hierzu wird sie mit einem Überfangzylinder aus Quarzglas überfangen und das koaxiale Ensemble aus primärer Vorform und Überfangzylinder gleichzeitig zu der sekundären Vorform elongiert. Bei diesem Kollabier- und Elongierprozess, der in vertikaler Orientierung der Vorform-Längsachse erfolgt, sind die oberen Enden der primären Vorform und des Überfangzylinders mit einem Halter aus Quarzglas verbunden, wobei der Verbund zwischen Vorform und Halter mittels der beschriebenen Verbindungsmasse erzeugt wird.

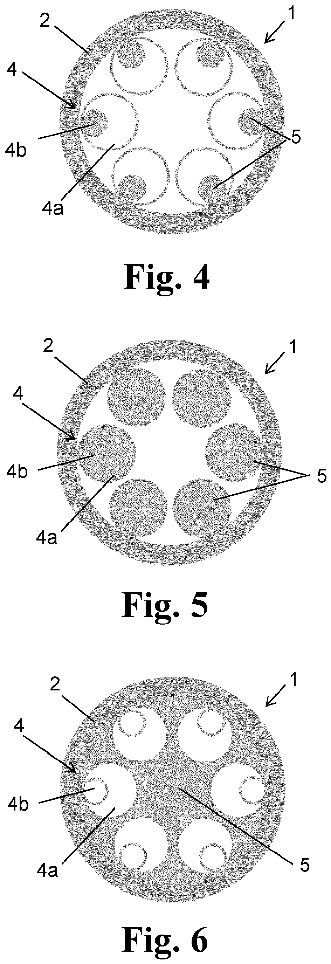

Die nach dem Kollabier- und Elongierprozess erhaltene sekundäre Vorform wird zu der Hohlkernfasern gezogen. Zu diesem Zweck wird die Vorform zusätzlich mit einem Gasanschluss aus Quarzglas verbunden, wobei der Verbund zwischen Vorform und Gasanschluss ebenfalls mittels der Verbindungsmasse erzeugt wird. Um dabei einer Druckbeaufschlagung der feinen Strukturelemente, wie beispielsweise dem ARE-Innenrohr 4b zu vermeiden, werden deren offene Enden vorab mittels der SiO₂-basierten Versiegelungs- und Verbindungsmasse 5 verschlossen, wie dies **Figur 4** schematisch zeigt. Die Versiegelungs- und Verbindungsmasse 5 ist dabei als grau schattierte Fläche erkennbar. Es genügt, wenn die Versiegelungs-und Verbindungsmasse 5 eine kurze Länge der Innenbohrung des ARE-Innenrohres 4b verschließt, vorzugsweise an demjenigen Ende, das bei Durchführung eines Heißformprozesses mit vertikal orientierter Vorform-Längsachse dem oberen Ende entspricht.

**Figur 5** zeigt eine Ausführungsform, bei der beide Strukturelemente (4a; 4b) der Antiresonanzelement-Vorformlinge 4 mit der Versiegelungs- und Verbindungsmasse verschlossen sind.

Es ist auch möglich, eine Druckzuführungsleitung in die Strukturelemente (4a und/oder 4b) einzuführen und die verbleibende Öffnung anschließend mit der SiO₂-haltigen Versiegelungsmasse abzudichten, so dass kein Druck nach oben entweichen kann.

**Figur 6** zeigt eine Ausführungsform, bei der beide Strukturelemente (4a; 4b) der Antiresonanzelement-Vorformlinge 4 offen sind, aber der restliche Querschnitt der Hüllrohr-Innenbohrung mit der Versiegelungs- und Verbindungsmasse verschlossen ist..

## Patentansprüche

1. Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen eines Hüllrohres (2), das eine Hüllrohr-Innenbohrung und eine Hüllrohr-Längsachse aufweist, entlang der sich eine von einer Innenseite und einer Außenseite begrenzte Hüllrohr-Wandung (2a) erstreckt,
(b) Bereitstellen einer Anzahl von Antiresonanzelement-Vorformlingen (4), wobei sich die Antiresonanzelement-Vorformline aus mehreren, miteinander verschachtelten Strukturelementen (4a; 4b) zusammensetzen,
(c) Anordnen der Antiresonanzelement-Vorformlinge (4) an Soll-Positionen der Innenseite der Hüllrohr-Wandung (2a) unter Bildung einer primären Vorform (17) für die Hohlkernfaser, die einen hohlen Kernbereich und einen Mantelbereich aufweist, und
(d) Elongieren der primären Vorform (1) zu der Hohlkernfaser oder Weiterverarbeitung der primären Vorform (1) zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** das Bereitstellen der Antiresonanzelement-Vorformlinge (4) eine Fixierungs-Maßnahme unter Einsatz einer amorphe SiO₂-Partikel enthaltenden Versiegelungs- oder Verbindungsmasse (5) umfasst, wobei die Strukturelemente (4a; 4b) untereinander unter Einsatz der Versiegelungs- oder Verbindungsmasse (5) fixiert werden, indem die Versiegelungs- oder Verbindungsmasse durch Erhitzen beim Durchführen eines Heißformprozesses gemäß Verfahrensschritt (d) verglast wird.

2. Verfahren nach Anspruch 1, **dadurch gekennzeichnet, dass** die Antiresonanzelement-Vorformlinge (4) an der Innenseite des Hüllrohres (2) unter Einsatz der Versiegelungs- oder Verbindungsmasse fixiert werden.

3. Verfahren nach Anspruch 2, **dadurch gekennzeichnet, dass** die Antiresonanzelement-Vorformlinge (4) zylinderförmig ausgeführt sind und zwei sich gegenüberliegende Endbereiche haben, und dass die Fixierung unter Einsatz der Versiegelungs- oder Verbindungsmasse (5) ausschließlich an einem der Endbereiche oder ausschließlich an beiden Endbereichen erfolgt.

4. Verfahren nach einem der vorhergehenden Ansprüche, **dadurch gekennzeichnet, dass** ein Hüllrohr (2) mit kreisrundem Innenquerschnitt bereitgestellt wird, und dass an der Innenseite der Hüllrohr-Wandung (2a) eine Längsstruktur (3), vorzugsweise eine Längsrille, erzeugt wird, die eine Ausnehmung aufweist, an der oder in der die Antiresonanzelement-Vorformlinge (4) fixiert werden.

5. Verfahren nach Anspruch 4, **dadurch gekennzeichnet, dass** die Versiegelungs- oder Verbindungsmasse (5) in die Ausnehmung der Längsstruktur (3) eingebracht wird und dass die Antiresonanzelement-Vorformlinge bei Anordnung an der Soll-Position gemäß Verfahrensschritt (c) die Versiegelungs- oder Verbindungsmasse (5) kontaktieren.

6. Verfahren nach Anspruch 4 oder 5, **dadurch gekennzeichnet, dass** die Längsstruktur der Hüllrohr-Innenwandung durch Bohren, Sägen, Fräsen, Schneiden oder Schleifen erzeugt wird.

7. Verfahren nach einem der Ansprüche 2 bis 6, **dadurch gekennzeichnet, dass** das Anordnend der Antiresonanzelement-Vorformlinge (4) an der Hüllrohr-Innenseite ein Fixieren mittels einer in die Hüllrohr-Innenbohrung einzuführenden Positionierungsschablone umfasst, die mehrere radial nach außen weisende Halteelemente zur Positionierung der Antiresonanzelement-Vorformlinge an den Soll-Positionen aufweist.

8. Verfahren nach Anspruch 7, **dadurch gekennzeichnet, dass** die Positionierungsschablone ausschließlich im Bereich der Hüllrohr-Stirnseiten, vorzugsweise im Bereich beider Hüllrohr-Stirnseiten, eingesetzt wird.

9. Verfahren nach einem der vorhergehenden Ansprüche, **dadurch gekennzeichnet, dass** die Fixierung zylinderförmiger Strukturelemente (4a; 4b) unter Einsatz der Versiegelungs- oder Verbindungsmasse (5) nur an einem stirnseitigen Ende oder nur an beiden stirnseitigen Enden der Strukturelemente (4a; 4b) erfolgt.

10. Verfahren nach einem der vorhergehenden Ansprüche, **dadurch gekennzeichnet, dass** zum Durchführen eines Prozesses gemäß Verfahrensschritt (d) die Vorform (1) mit einem Halter verbunden wird, und dass der Verbund zwischen Vorform (1) und Halter mittels der Versiegelungs- oder Verbindungsmasse erzeugt wird.

11. Verfahren nach einem der vorhergehenden Ansprüche, **dadurch gekennzeichnet, dass** zum Durchführen eines Prozesses gemäß Verfahrensschritt (d) die Vorform (1) mit einem Gasanschluss verbunden wird, und dass der Verbund zwischen Vorform (1) und Gasanschluss mittels der Versiegelungs- oder Verbindungsmasse (5) erzeugt wird.

12. Verfahren nach einem der vorhergehenden Ansprüche, **dadurch gekennzeichnet, dass** zum Durchführen eines Prozesses gemäß Verfahrensschritt (d) offene Enden der Antiresonanzelement-Vorformlinge (4) und/oder einzelne Strukturelemente (4a; 4b) der Antiresonanzelement-Vorformlinge (4) und/oder ein etwaiger Ringspalt zwischen Rohrelementen mittels der Versiegelungs- oder Verbindungsmasse (5) verschlossen werden.

13. Verfahren nach einem der vorhergehenden Ansprüche, **dadurch gekennzeichnet, dass** die Versiegelungs- oder Verbindungsmasse (5) durch Erwärmen verdichtet und vorzugsweise durch Erhitzen beim Durchführen eines Prozesses gemäß Verfahrensschritt (d) verglast wird.

14. Verfahren nach einem der vorhergehenden Ansprüche, **dadurch gekennzeichnet, dass** die Antiresonanzelemente um den Hohlkern mit einer ungeradzahligen Symmetrie angeordnet sind.

15. Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres (2), das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von Antiresonanzelement-Vorformlingen (4), wobei sich die Antiresonanzelement-Vorformline aus mehreren, miteinander verschachtelten Strukturelementen (4a; 4b) zusammensetzen,
(c) Anordnen der Antiresonanzelement-Vorformlinge (4) an jeweils einer Soll-Position der Innenseite der Hüllrohr-Wandung (2a) unter Bildung einer primären Vorform (1) für die Hohlkernfaser, die einen hohlen Kernbereich und einen Mantelbereich aufweist, und
(d) Weiterverarbeitung der primären Vorform (1) zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** das Bereitstellen der Antiresonanzelement-Vorformlinge (4) eine Fixierungs-Maßnahme unter Einsatz einer amorphe SiO₂-Partikel enthaltenden Versiegelungs- oder Verbindungsmasse (5) umfasst, wobei die Strukturelemente (4a; 4b) untereinander unter Einsatz der Versiegelungs- oder Verbindungsmasse (5) fixiert werden, indem die Versiegelungs- oder Verbindungsmasse durch Erhitzen beim Durchführen eines Heißformprozesses gemäß Verfahrensschritt (d) verglast wird.

## Claims

1. A method for producing an anti-resonant hollow-core fiber which comprises a hollow core extending along a longitudinal axis of the fiber and a casing region that surrounds the hollow core and comprises a plurality of anti-resonant elements, comprising the method steps of:
(a) providing a sheath tube (2), which comprises a sheath tube inner bore and a sheath tube longitudinal axis, along which a sheath tube wall (2a) extends, which wall is delimited by an inner face and an outer face,
(b) providing a number of anti-resonant element preforms (4), wherein the anti-resonant element preforms are composed of a plurality of nested structural elements (4a; 4b),
(c) arranging the anti-resonant element preforms (4) at desired positions on the inner face of the sheath tube wall (2a) to form a primary preform (17) for the hollow-core fiber, which primary preform comprises a hollow core region and a casing region, and
(d) elongating the primary preform (1) to form the hollow-core fiber or further processing the primary preform (1) to form a secondary preform from which the hollow-core fiber is drawn, wherein the further processing comprises carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** providing the anti-resonant element preforms (4) comprises a fixing measure using a sealing or bonding compound (5) containing amorphous SiOz particles, wherein the structural elements (4a; 4b) are fixed to one another using the sealing or bonding compound (5) by vitrifying the sealing or bonding compound by heating when carrying out a hot-forming process according to method step (d).

2. The method according to claim 1, **characterized in that** the anti-resonant element preforms (4) are fixed to the inner face of the sheath tube (2) using the sealing or bonding compound.

3. The method according to claim 2, **characterized in that** the anti-resonant element preforms (4) are cylindrical and comprise two opposite end regions, and **in that** the fixing using the sealing or bonding compound (5) takes place exclusively at one of the end regions or exclusively at both end regions.

4. The method according to any of the preceding claims, **characterized in that** a sheath tube (2) with a circular inner cross section is provided, and **in that** on the inner face of the sheath tube wall (2a) a longitudinal structure (3), preferably a longitudinal groove, is produced which comprises a recess on which or in which the anti-resonant element preforms (4) are fixed.

5. The method according to claim 4, **characterized in that** the sealing or bonding compound (5) is introduced into the recess of the longitudinal structure (3) and **in that** the antiresonant element preforms contact the sealing or bonding compound (5) when arranged at the desired position according to method step (c).

6. The method according to claim 4 or 5, **characterized in that** the longitudinal structure of the sheath tube inner wall is created by drilling, sawing, milling, cutting or grinding.

7. The method according to any of claims 2 to 6, **characterized in that** the arranging of the anti-resonant element preforms (4) on the inner face of the sheath tube comprises fixing by means of a positioning template to be inserted into the inner bore of the sheath tube, which positioning template comprises a plurality of radially outward-pointing holding elements for positioning the anti-resonant element preforms at the desired positions.

8. The method according to claim 7, **characterized in that** the positioning template is used exclusively in the region of the sheath tube end faces, preferably in the region of both sheath tube end faces.

9. The method according to any of the preceding claims, **characterized in that** the fixing of cylindrical structural elements (4a; 4b) using the sealing or bonding compound (5) is carried out only at one front end or only at both front ends of the structural elements (4a; 4b).

10. The method according to any of the preceding claims, **characterized in that**, in order to carry out a process according to method step (d), the preform (1) is connected to a holder, and **in that** the bond between the preform (1) and the holder is produced by means of the sealing or bonding compound.

11. The method according to any of the preceding claims, **characterized in that**, in order to carry out a process according to method step (d), the preform (1) is connected to a gas connection, and **in that** the bond between the preform (1) and the gas connection is produced by means of the sealing or bonding compound (5).

12. The method according to any of the preceding claims, **characterized in that**, in order to carry out a process according to method step (d), open ends of the anti-resonant element preforms (4) and/or individual structural elements (4a; 4b) of the anti-resonant element preforms (4) and/or any annular gap between tube elements are closed by means of the sealing or bonding compound (5).

13. The method according to any of the preceding claims, **characterized in that** the sealing or bonding compound (5) is compacted by heating and preferably vitrified by heating when carrying out a process according to method step (d).

14. The method according to any of the preceding claims, **characterized in that** the antiresonant elements are arranged around the hollow core with an uneven symmetry.

15. A method for producing a preform for an anti-resonant hollow-core fiber which comprises a hollow core extending along a longitudinal axis of the fiber and a casing region which surrounds the hollow core and comprises a plurality of anti-resonant elements, comprising the method steps of:
(a) providing a sheath tube (2), which comprises a sheath tube inner bore and a sheath tube longitudinal axis, along which a sheath tube wall extends, which wall is delimited by an inner face and an outer face,
(b) providing a number of anti-resonant element preforms (4), wherein the anti-resonant element preforms are composed of a plurality of nested structural elements (4a; 4b),
(c) arranging each of the anti-resonant element preforms (4) at a desired position on the inner face of the sheath tube wall (2a) to form a primary preform (1) for the hollow-core fiber, which primary preform comprises a hollow core region and a casing region, and
(d) further processing the primary preform (1) to form a secondary preform for the hollow-core fiber, wherein the further processing comprises carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** providing the anti-resonant element preforms (4) comprises a fixing measure using a sealing or bonding compound (5) containing amorphous SiOz particles, wherein the structural elements (4a; 4b) are fixed to one another using the sealing or bonding compound (5) by vitrifying the sealing or bonding compound by heating when carrying out a hot-forming process according to method step (d).

## Revendications

1. Procédé pour la fabrication d'une fibre à coeur creux antirésonante qui présente un coeur creux s'étendant le long d'un axe longitudinal de fibre et une zone enveloppante entourant le coeur creux, laquelle comprend plusieurs éléments antirésonance, comportant les étapes de procédé consistant à :
(a) fournir un tuyau de gaine (2) qui présente un trou interne de tuyau de gaine et un axe longitudinal de tuyau de gaine le long duquel s'étend une paroi de tuyau de gaine (2a) délimitée par une face interne et une face externe,
(b) fournir un certain nombre de préformes d'éléments antirésonance (4), dans lequel les préformes d'éléments antirésonance sont composées de plusieurs éléments structurels (4a ; 4b) imbriqués les uns dans les autres,
(c) disposer les préformes d'éléments antirésonance (4) dans des positions de consigne de la face interne de la paroi de tuyau de gaine (2a) avec formation d'une préforme primaire (17) pour la fibre à coeur creux, laquelle préforme primaire présente une zone de coeur creux et une zone enveloppante, et
(d) allonger la préforme (1) primaire en fibre à coeur creux ou traiter ultérieurement la préforme (1) primaire en une préforme secondaire à partir de laquelle la fibre à coeur creux est étirée, dans lequel le traitement ultérieur comprend une réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** la fourniture des préformes d'éléments antirésonance (4) comprend une opération de fixation en utilisant une matière de scellement ou de liaison (5) contenant des particules amorphes de SiO₂, dans lequel les éléments structurels (4a ; 4b) sont fixés les uns aux autres en utilisant la matière de scellement ou de liaison (5) en vitrifiant la matière de scellement ou de liaison par chauffage lors de la réalisation d'un processus de thermoformage selon l'étape de procédé (d).

2. Procédé selon la revendication 1, **caractérisé en ce que** les préformes d'éléments antirésonance (4) sont fixées sur la face interne du tuyau de gaine (2) en utilisant la matière de scellement ou de liaison.

3. Procédé selon la revendication 2, **caractérisé en ce que** les préformes d'éléments antirésonance (4) sont conçues en forme de cylindre et ont deux zones d'extrémité opposées, et **en ce que** la fixation est effectuée en utilisant la matière de scellement ou de liaison (5) exclusivement sur l'une des zones d'extrémité ou exclusivement sur les deux zones d'extrémité.

4. Procédé selon l'une des revendications précédentes, **caractérisé en ce qu'**un tuyau de gaine (2) comportant une section transversale intérieure circulaire est fourni, et **en ce que**, sur la face interne de la paroi de tuyau de gaine (2a), une structure longitudinale (3), de préférence une rainure longitudinale, est produite, laquelle présente un évidement sur lequel ou dans lequel sont fixées les préformes d'éléments antirésonance (4).

5. Procédé selon la revendication 4, **caractérisé en ce que** la matière de scellement ou de liaison (5) est introduite dans l'évidement de la structure longitudinale (3) et **en ce que** les préformes d'éléments antirésonance entrent en contact avec la matière de scellement ou de liaison (5) lorsqu'elles sont disposées dans la position de consigne selon l'étape de procédé (c).

6. Procédé selon la revendication 4 ou 5, **caractérisé en ce que** la structure longitudinale de la paroi interne de tuyau de gaine est produite par perçage, sciage, fraisage, découpage ou meulage.

7. Procédé selon l'une des revendications 2 à 6, **caractérisé en ce que** la disposition des préformes d'éléments antirésonance (4) sur la face interne de tuyau de gaine comprend une fixation au moyen d'un gabarit de positionnement à insérer dans le trou interne de tuyau de gaine, ledit gabarit présentant plusieurs éléments de retenue orientés radialement vers l'extérieur pour le positionnement des préformes d'éléments antirésonance dans les positions de consigne.

8. Procédé selon la revendication 7, **caractérisé en ce que** le gabarit de positionnement est utilisé exclusivement dans la zone de la face frontale de tuyau de gaine, de préférence dans la zone des deux faces frontales de tuyau de gaine.

9. Procédé selon l'une des revendications précédentes, **caractérisé en ce que** la fixation d'éléments structurels (4a ; 4b) cylindriques s'effectue en utilisant la matière de scellement ou de liaison (5) uniquement au niveau d'une extrémité frontale ou uniquement au niveau de deux extrémités frontales des éléments structurels (4a ; 4b).

10. Procédé selon l'une des revendications précédentes, **caractérisé en ce que**, pour la réalisation d'un processus selon l'étape de procédé (d), la préforme (1) est reliée à un support, et **en ce que** la liaison entre la préforme (1) et le support est produite au moyen de la matière de scellement ou de liaison.

11. Procédé selon l'une des revendications précédentes, **caractérisé en ce que**, pour la réalisation d'un processus selon l'étape de procédé (d), la préforme (1) est reliée à un raccord de gaz, et **en ce que** la liaison entre la préforme (1) et le raccord de gaz est produite au moyen de la matière de scellement ou de liaison (5).

12. Procédé selon l'une des revendications précédentes, **caractérisé en ce que**, pour la réalisation d'un processus selon l'étape de procédé (d), des extrémités ouvertes des préformes d'éléments antirésonance (4) et/ou d'éléments structurels (4a ; 4b) individuels des préformes d'éléments antirésonance (4) et/ou un éventuel espace annulaire entre des éléments tubulaires sont fermés au moyen de la matière de scellement ou de liaison (5).

13. Procédé selon l'une des revendications précédentes, **caractérisé en ce que** la matière de scellement ou de liaison (5) est comprimée par chauffage et de préférence vitrifiée par chauffage lors de la réalisation d'un processus selon l'étape de procédé (d).

14. Procédé selon l'une des revendications précédentes, **caractérisé en ce que** les éléments antirésonance sont disposés autour du coeur creux avec une symétrie impaire.

15. Procédé pour la fabrication d'une préforme pour une fibre à coeur creux antirésonante qui présente un coeur creux s'étendant le long d'un axe longitudinal de fibre et une zone enveloppante entourant le coeur creux, laquelle zone enveloppante comprend plusieurs éléments antirésonance, comportant les étapes de procédé consistant à :
(a) fournir un tuyau de gaine (2) qui présente un trou interne de tuyau de gaine et un axe longitudinal de tuyau de gaine le long duquel s'étend une paroi de tuyau de gaine délimitée par une face interne et une face externe,
(b) fournir un certain nombre de préformes d'éléments antirésonance (4), dans lequel les préformes d'éléments antirésonance sont composées de plusieurs éléments structurels (4a ; 4b) imbriqués les uns dans les autres,
(c) disposer les préformes d'éléments antirésonance (4) dans respectivement une position de consigne de la face interne de la paroi de tuyau de gaine (2a) avec formation d'une préforme (1) primaire pour la fibre à coeur creux, laquelle préforme primaire présente une zone de coeur creux et une zone enveloppante, et
(d) traiter ultérieurement la préforme (1) primaire en une préforme secondaire pour la fibre à coeur creux, dans lequel le traitement ultérieur comprend une réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** la fourniture des préformes d'éléments antirésonance (4) comprend une opération de fixation en utilisant une matière de scellement ou de liaison (5) contenant des particules amorphes de Si0₂, dans lequel les éléments structurels (4a ; 4b) sont fixés les uns aux autres en utilisant la matière de scellement ou de liaison (5) en vitrifiant la matière de scellement ou de liaison par chauffage lors de la réalisation d'un processus de thermoformage selon l'étape de procédé (d).
